(19) Europäisches Patentamt / European Patent Office / Office européen des brevets

(11) **EP 1 578 109 B1**

(12) **EUROPEAN PATENT SPECIFICATION**

(45) Date of publication and mention
of the grant of the patent:
**05.10.2011 Bulletin 2011/40**

(51) Int Cl.:
*H04N 1/40* *(2006.01)* *H04N 1/407* *(2006.01)*

(21) Application number: **05005144.0**

(22) Date of filing: **09.03.2005**

(54) **Imaging apparatus, image processing apparatus, image processing system and image processing method**

Bilderzeugungsgerät, Bildverarbeitungsvorrichtung, -system und -verfahren

Dispositif d'imagerie, appareil, système et procédé de traitement d'image

(84) Designated Contracting States:
**DE FR GB NL**

(30) Priority: **16.03.2004 JP 2004075086**
**18.03.2004 JP 2004077632**

(43) Date of publication of application:
**21.09.2005 Bulletin 2005/38**

(73) Proprietor: **Olympus Corporation**
**Shibuya-ku, Tokyo (JP)**

(72) Inventor: **Toyoda, Tetsuya, c/o Int. Prop. Dept.**
**Hachioji-shi**
**Tokyo (JP)**

(74) Representative: **von Hellfeld, Axel**
**Wuesthoff & Wuesthoff**
**Patent- und Rechtsanwälte**
**Schweigerstrasse 2**
**81541 München (DE)**

(56) References cited:
**EP-A- 0 838 939 WO-A-2004/008754**
**JP-A- 5 323 750 US-A1- 2002 036 697**

**Description**

The present invention relates to an image processing system and an image processing method.

In conventional digital cameras, there has been known a digital camera provided with a function which directly stores image data yet to be subjected to image processing (which will be referred to as raw data hereinafter) in a recording medium or the like. The raw data is a kind of data obtained by converting an output from an imaging element into a digital image as it is. Therefore, the raw data cannot be viewed or printed as an image if no processing is applied thereto. In that sense, it is assumed that the raw data is subjected to image processing in a dedicated image processing apparatus or a PC application having an image processing function.

Usually, elements (e.g., gradation characteristics, color reproduction, and white balance) concerning image quality when performing image processing in a digital camera are determined at the time of image capturing. Conversion from the raw data into image data subjected to image processing is irreversible. Again changing gradation characteristics, white balance or the like after image processing may lead to a deterioration in image quality as compared with the case where gradation conversion or white balance processing is directly applied to the raw data. On the other hand, when the raw data is subjected to image processing after image capturing, elements concerning an image quality can be freely changed without a deterioration in image quality, and this is recognized as a utility value of the raw data.

Here, the gradation characteristics are determined based on an exposure level when image-capturing raw data and a gradation conversion table when performing gradation conversion. The exposure level is determined when capturing an image. On the other hand, as a technique of determining the gradation conversion table, there have been proposed various techniques, e.g., a technique which uses data stored in an image processing apparatus in advance, a technique which analyzes raw data by an image processing apparatus and generates an appropriate gradation conversion table in accordance with a result of this analysis, a technique which transfers a gradation conversion table attached to raw data to an image processing apparatus, and others. Further, Jpn. Pat. Appln. KOKAI Publication No. 2003-244626 proposes a technique which transfers imaging gamma information indicative of a gamma correction quantity based on imaging characteristics of an imaging apparatus to an image processing apparatus and updates a gradation conversion table previously stored in the image processing apparatus in accordance with output characteristics base on the transferred information.

Furthermore, as conventional digital cameras, one provided with a function which applies image processing and records obtained data in a recording medium or the like is commonly used. Moreover, there has been known a PC application software (a PC application) or the like which reads recorded image data and applies image processing in accordance with preferences of a user. As a content of this image processing, there is, e.g., a change in white balance or in color reproduction. It is preferable that such processing is carried out with respect to data which is linear (y = 1) with respect to a light quantity of a subject rather than data subjected to gradation conversion. Therefore, when performing processing which changes the white balance by a PC application or the like, it is preferable that image data is converted into data which is linear with respect to a light quantity in accordance with inverse characteristics of gradation conversion characteristics applied to the image data and then the white balance or the like is changed, and thereafter gradation conversion is again conducted.

In order to perform such inverse conversion of gradation conversion effected in a camera, characteristics of gradation conversion performed in the camera must be transferred to an image processing apparatus. As techniques which realize this transfer, there have been proposed various techniques such as a technique which previously stores a predetermined gradation conversion table in an image processing apparatus, a technique which transfers a gradation conversion table attached to image data to an image processing apparatus, and others.

Here, the technique which previously stores a gradation conversion table in an image processing apparatus presumes that a reference for an exposure when image data which should be processed is captured is known in advance. However, concepts concerning a proper exposure level generally differ depending on models of cameras or design concepts of manufacturers, and hence a gradation conversion table which differs in accordance with each model or each manufacturer is used. Therefore, a gradation conversion table corresponding to each camera must be stored in advance, and a capacity of a memory which is used to store a gradation conversion table is increased. Additionally, when a gradation conversion table for a camera developed after release of an image processing apparatus is not stored in advance, image processing cannot be performed.

Further, the technique which transfers a gradation conversion table attached to image data to an image processing apparatus increases a data capacity for a quantity corresponding to the attached data, and hence a transfer rate of image data is affected by this increase in data capacity.

EP 1 523 182 A1 relates to an output image adjustment of image data, wherein a CPU calculates modified brightness correction amount tCurve_Y with consideration of exposure correction amount (or exposure value) EV if photography information is included in image data. Specifically, the modified brightness correction amount tCurve_Y is calculated by dividing original brightness correction amount tCurve_Yorg by $2^{|EV|}$. Therefore, it decreases in geometrical progression as the exposure correction amount increases. The CPU applies the obtained modified brightness correction amount tCurve_Y to a tone curve to adjust image quality including brightness. More specifically, it uses the modified brightness correction amount tCurve_Y to modify the characteristics of the tone curve, and then uses the modified tone curve to adjust the image quality of the image data.

US 2002/0036697 A1 refers to an imaging apparatus, wherein a digital camera which can change gradation properties comprises a CCD image pickup element for photographing a subject, an exposure control mechanism for controlling an exposure on the image pickup element, a digital processing circuit including a gradation converting circuit for being capable of generating image signals having different gradation properties (gamma properties) based on the output signal from the image pickup element, and a system controller including a selecting circuit for selecting one of the different gradation properties, which is used in the gradation converting circuit. In the digital camera, to suppress the change of a sensitivity (output level) due to a change of the gradation property, the exposure control mechanism changes a control target value to control the exposure in accordance with the selected gamma value so that the output level is maintained at constant in the average exposure.

JP 05323750 A relates to a digital image forming device, wherein plural gradation characteristic curves selected by a selection means are stored in a storage means and the target gradation curve is selected by the user by using the selection means. The selection is preferably executed at two stages of the type (the shape of the curve) and the level (the degree of the change of the shape) of the gradation curve. By a light emission control means, exposure data is corrected based on the gradation curve selected by the selection means.

WO 2004/008754 A1 refers to output image adjustment of image data, wherein when image data includes imaging information, a CPU calculates a modified lightness correction amount with an exposure correction amount (EV) taken into account. Specifically, the modified lightness correction amount is calculated by multiplying the original lightness correction amount by $\frac{1}{2}^{|EV|}$. Accordingly, as the exposure correction amount increases, the modified lightness correction amount decreases like geometric series. The CPU applies the obtained modified lightness correction amount to a tone curve and executes picture-quality adjustment including the lightness. That is, the modified lightness correction amount is used to modify the tone curve characteristic, and the modified tone curve is applied to image data to adjust the picture quality of the image data.

It is an object of the present invention to provide an image processing system and an image processing method which can perform appropriate gradation conversion processing of gradation characteristics with respect to raw data captured based on an arbitrary exposure reference.

Furthermore, it is another object of the present invention to provide an image processing system and an image processing method which can appropriately change an image quality with respect image data captured based on an arbitrary exposure reference in accordance with preferences of a user.

According to a first aspect of the present invention, there is provided an image processing system as defined by independent claim 1.

According to a second aspect of the present invention, there is provided an image processing method as defined by independent claim 10.

Preferred embodiments of the first and second aspects of the present invention are defined by the dependent claims.

The invention can be more fully understood from the following detailed description when taken in conjunction with the accompanying drawings, in which:

FIG. 1 is a block diagram showing a configuration of an image processing system according to an embodiment of the present invention;
FIG. 2 is a block diagram showing a configuration of a digital camera as an example of an imaging apparatus;
FIG. 3A is a block diagram of a PC as an example of an image processing apparatus;
FIG. 3B is a view showing a table which is used to obtain a gradation conversion table;
FIG. 4 is a view showing an example of a gradation conversion table;
FIG. 5A is a view showing correction of a gradation conversion table based on contrast correction;
FIG. 5B is a view showing gradation characteristic curves of FIG. 5A;
FIG. 6A is a view showing correction of a gradation conversion table based on exposure correction;
FIG. 6B is a view showing gradation characteristic curves of FIG. 6A;
FIG. 6C is an enlarged view showing the vicinity of a saturation area of FIG. 6B;
FIG. 7 is a flowchart showing processing on a digital camera side for illustrating an image processing method according to the embodiment of the present invention;
FIG. 8 is a flowchart showing processing on an image processing apparatus side for illustrating an image processing method according to the embodiment of the present invention; and
FIG. 9 is a block diagram showing a modification of the present invention.

An embodiment according to the present invention will now be described hereinafter with reference to the accompanying drawings.

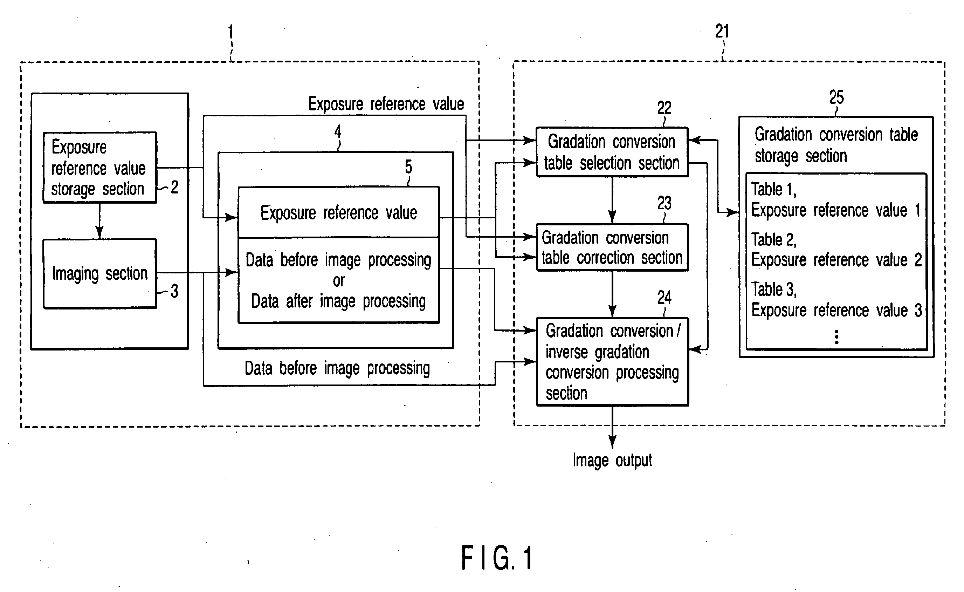

FIG. 1 is a block diagram illustrating a conceptual configuration of an image processing system according to an embodiment of the present invention. An image processing system depicted in FIG. 1 comprises an imaging apparatus 1 and an image processing apparatus 21.

The imaging apparatus 1 will be first explained. The imaging apparatus 1 comprises an exposure reference value storage section 2, an imaging section 3 and a recording medium 4.

In the imaging section 3, imaging of a non-illustrated subject is performed in accordance with an exposure reference value (to be described in detail later) stored in the exposure reference value storage section 2 and image data is thereby acquired. Thereafter, image processing is performed with respect to the image data in accordance with a use application.

After the image data is acquired in the imaging section 3, the exposure reference value is added to header information in the acquired image data in order to generate an image file 5, and this generated image file 5 is recorded in the recording medium 4.

The image processing apparatus 21 will now be described. The image processing apparatus 21 is an image processing apparatus capable of executing gradation conversion processing and processing corresponding to inverse gradation conversion. The image processing apparatus 21 comprises a gradation conversion table selection section 22, a gradation conversion table correction section 23, a gradation conversion/inverse gradation conversion processing section 24, and a gradation conversion table storage section 25. Here, the processing corresponding to inverse conversion of gradation conversion is processing which converts image data subjected to gradation conversion processing into image data which is substantially linear with respect to a light quantity before gradation conversion is applied. In this processing, the processed data does not necessarily match with image data before gradation conversion. However, further appropriate processing can be executed by performing such processing even when processing such as a white balance correction is again effected with respect to image data after image processing. It is to be noted that processing corresponding to inverse conversion of gradation conversion will be simply referred to as inverse gradation conversion processing hereinafter.

The image file 5 generated in the imaging apparatus 1 is input to the image processing apparatus 21. In this embodiment, the exposure reference value stored in the exposure reference value storage section 2 and the image data acquired in the imaging section 3 can be directly input to the image processing apparatus 21 without generating the image file 5 in the imaging apparatus 1.

After the image file 5 is input to the image processing apparatus 21, when gradation conversion processing for an image is commanded by a user, the gradation conversion table selection section 22 selects a gradation conversion table in accordance with the exposure reference value. In this example, as shown in FIG. 1, the gradation conversion table storage section 25 stores a plurality of gradation conversion tables corresponding to a plurality of exposure reference values therein. The gradation conversion table selection section 22 selects a gradation conversion table corresponding to the input exposure reference value from the gradation conversion tables stored in the gradation conversion table storage section 25.

Thereafter, when a gradation conversion table correction is commanded by a user for example, the gradation conversion table correction section 23 corrects the gradation conversion table.

Then, different processing is executed depending on whether image processing (gradation conversion processing) is performed with respect to the image data acquired by the imaging section 3.

When the gradation conversion processing is not effected to the input image data, the gradation conversion/inverse gradation conversion processing section 24 executes the gradation conversion processing for the input image data based on the gradation conversion table selected by the gradation conversion table selection section 22 and corrected by the gradation conversion table correction section 23. In contrast, when the gradation conversion processing is performed with respect to the input image data, the gradation conversion/inverse gradation conversion processing section 24 executes the inverse gradation conversion processing with respect to the input image data based on the gradation conversion table selected by the gradation conversion table selection section 22 and corrected by the gradation conversion table correction section 23.

The image processing system depicted in FIG. 1 will now be described in more detail.

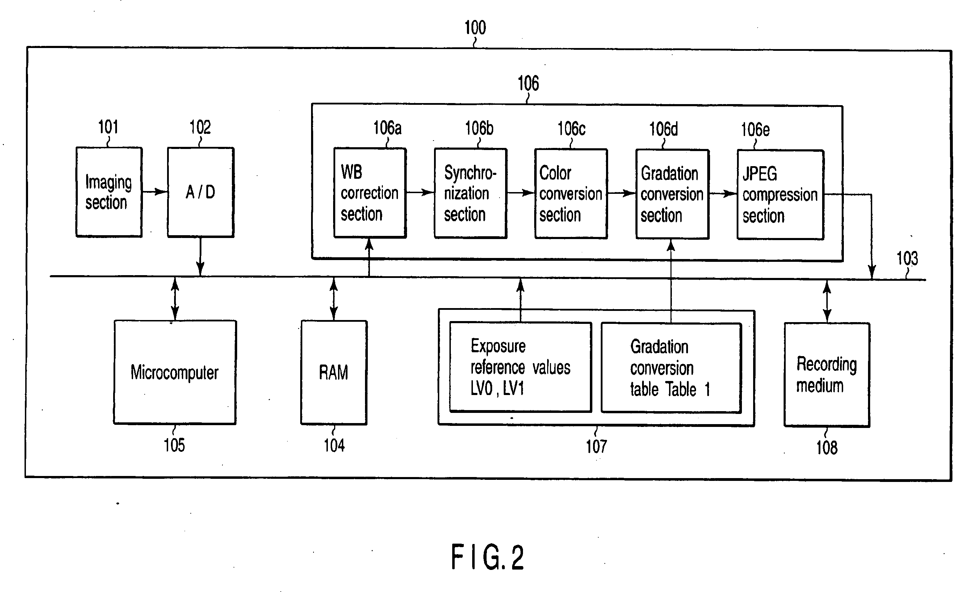

FIG. 2 is a block diagram showing a configuration of a digital camera 100 as an example of the imaging apparatus 1 depicted in FIG. 1. The digital camera 100 illustrated in FIG. 2 comprises an imaging section 101, an analog-to-digital conversion section 102, a bus line 103, an RAM 104, a microcomputer 105, an image processing section 106, an ROM 107 and a recording medium 108.

The imaging section 101 comprises a capturing optical system, an imaging element (a CCD) or the like. The imaging section 101 forms an image of a light beam from a non-illustrated subject on the imaging element through the capturing optical system. Then, the image-formed light beam is converted into an electrical signal in the imaging element. The analog-to-digital conversion section 102 converts an analog image signal output from the imaging section 101 into digital image data. This image data is temporarily stored in the RAM 104 through the bus line 103. It is to be noted that the RAM 104 temporarily stores image data and also temporarily stores various kinds of data at the time of a distance measuring arithmetic operation, a photometric arithmetic operation and others. Image data immediately after output from the analog-to-digital conversion section 102 will be referred to as raw data hereinafter.

Then, different processing is executed depending on whether an image quality mode in image data recording is set to a JPEG mode (an image quality mode in which image processing is effected) or set to a raw mode (an image quality mode in which no image processing is carried out).

When the image quality mode is set to the JPEG mode, the raw data stored in the RAM 104 is input to the image processing section 106 through the bus line 103. The image processing section 106 comprises a white balance (WB) correction section 106a, a synchronization section 106b, a color conversion section 106c, a gradation conversion section 106d, and a JPEG compression section 106e. The WB correction section 106a performs white balance correction processing which adjusts an RGB gain in an image. The synchronization section 106b performs synchronization processing which synchronizes Bayer data. The color conversion section 106c executes a color matrix arithmetic operation which standardizes RGB data. Further, the gradation conversion section 106d performs gradation conversion processing based on the exposure reference value and the gradation conversion table stored in the ROM 107.

The exposure reference value will now be described. The exposure reference value is a value which serves as a reference for an exposure in image capturing. In this embodiment, as the exposure reference value, a value as a target of an exposure control (LV0) and a value obtained by subjecting LV0 to gradation conversion (LV1) are used. Giving a more concrete explanation, LV0 is a pixel value of raw data (i.e., an output from the analog-to-digital conversion section 102) obtained when capturing an image of an even surface under the automatic exposure control, and LV1 is a pixel value after subjecting LV0 to gradation conversion in accordance with a gradation conversion table previously stored in the ROM 107.

The image data section 106 is input to the JPEG compression section 106e. The JPEG compression section 106e subjects the input image data to JPEG compression. The compressed image data will be referred to as JPEG data hereinafter. Subsequently, header information is added to the JPEG data, thereby generating a JPEG file. In this embodiment, as the header information, white balance gain in the white balance correction processing, color conversion matrix in the color conversion processing, and image quality mode in image capturing as well as exposure reference values LV0 and LV1 are recorded.

The JPEG file generated by the image processing section 106 in this manner is controlled by the microcomputer 105, and recorded in the recording medium 108. The microcomputer 105 is a control section which is in charge of controlling the entire digital camera 100, and also executes focusing control of the capturing optical system or drive control of the imaging element in the imaging section 101, arithmetic operation controls such as the distance measuring arithmetic operation or the photometric arithmetic operation, and others. Furthermore, a detachable recording medium such as a memory card is assumed as the recording medium 108, but the recording medium 8 may be of a built-in type if data can be transmitted/received between the digital camera 100 and the image processing apparatus.

Moreover, when the image quality mode is set to the raw mode, the header information is added to the raw data output from the analog-to-digital conversion section 102, thereby generating a raw file. The thus generated raw file is recorded in the recording medium 108 under control of the microcomputer 105.

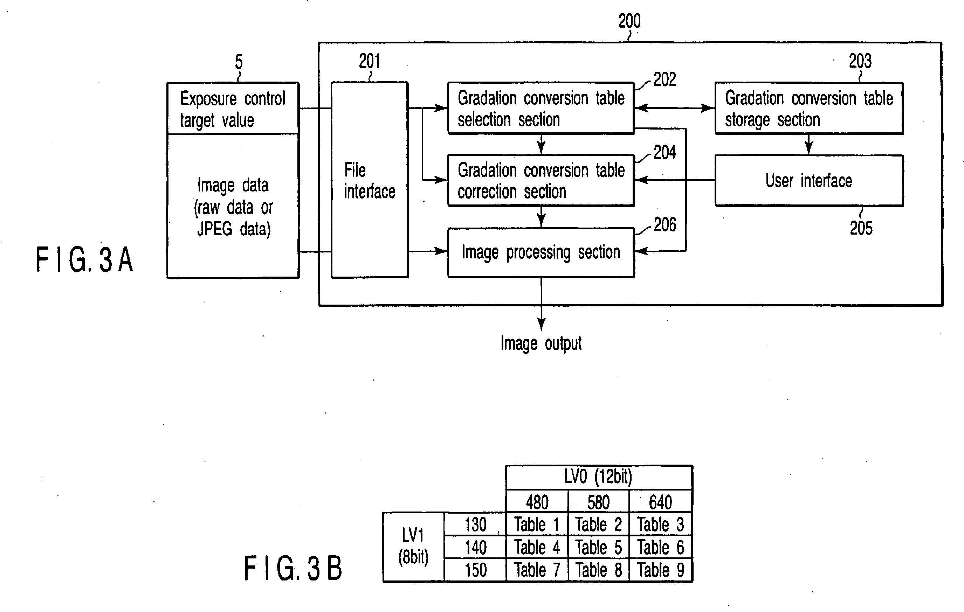

FIG. 3A is a block diagram showing a configuration of a PC 200 as an example of the image processing apparatus 21 depicted in FIG. 1. The PC 200 illustrated in FIG. 3A comprises a file interface 201, a gradation conversion table selection section 202, a gradation conversion table storage section 203, a gradation conversion table correction section 204, a user interface 205, and an image processing section 206. It is to be noted that some of these constituent elements are realized by application software in the PC.

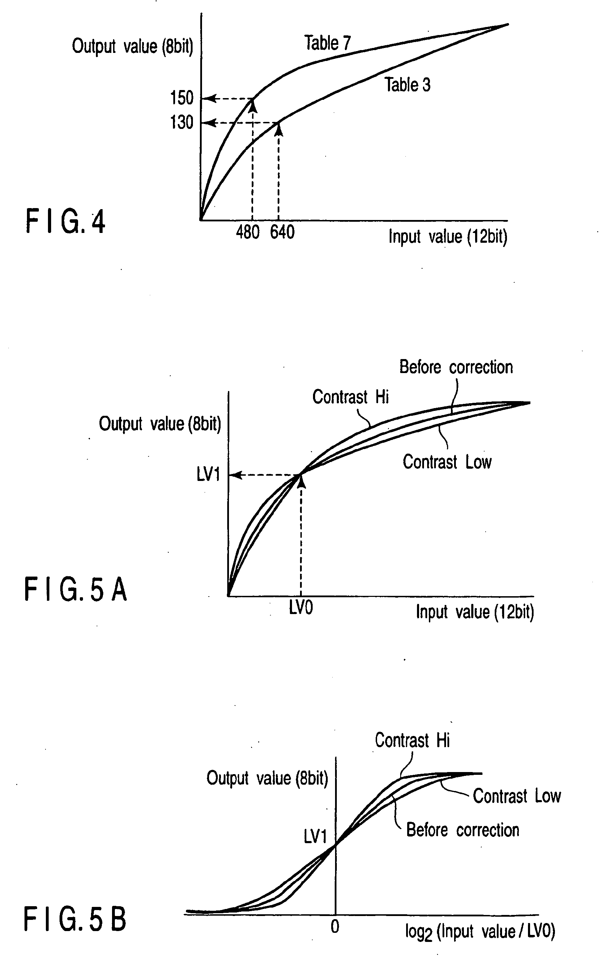

When the image file 5 is input to the PC 200 through the file interface 201, the gradation conversion table selection section 202 reads the exposure reference values LV0 and LV1 recorded in the image file 5. Then, the gradation conversion table corresponding to LV0 and LV1 is selected from the gradation conversion table storage section 203. FIG. 3B shows a table of the gradation conversion table stored in the gradation conversion table storage section 203. That is, the gradation conversion table storage section 203 stores a plurality of gradation conversion tables (nine tables Table 1 to Table 9 in FIG. 3B) corresponding to a plurality of sets of LV0 and LV1 therein. The gradation conversion table selection section 202 selects the gradation conversion table which is closest to the read set of LV0 and LV1. FIG. 4 shows an example of the gradation conversion tables. At the time of gradation conversion, an input (a pixel value represented by 12 bits of 0 to 4095) from the analog-to-digital conversion section 102 is converted into a pixel value represented by eight bits of 0 to 255 in accordance with the gradation conversion tables shown in FIG. 4.

When changing a contrast of an image is commanded or an exposure correction of an image is instructed through the user interface 205 such as a keyboard or a pointing device, the gradation conversion table correction section 204 corrects the gradation conversion table. In this example, the exposure correction is not carried out by the digital camera 100, but it means exposure correction executed as post-processing of the PC 200.

A description will now be given as to a correction of the gradation conversion table when a change of contrast is commanded. FIG. 5A is a view showing a correction example of the gradation conversion table based on the contrast change, and FIG. 5B is a view showing gradation characteristic curves of FIG. 5A.

For example, when an increase in contrast of an image is instructed by a user, the gradation conversion table (before the correction) depicted in FIG. 5A is corrected to a gradation conversion table (contrast Hi). On the other hand, when a reduction in contrast of an image is commanded by a user, the gradation conversion table (before the correction) is corrected to a gradation conversion table (contrast Low). Here, when correcting the gradation conversion table in this embodiment, the gradation conversion table is corrected to run through a coordinate of (LV0, LV0) shown in FIG. 5A. This correction can be effected in such a manner that a gradation conversion table is newly generated in accordance with a contrast indicated by a user. Additionally, it is also possible to store a plurality of gradation conversion tables corresponding to contrast changes in the gradation conversion table storage section 203 and select a gradation conversion table from the gradation conversion table storage section 203 in accordance with the contrast indicated by a user. Further, when a gradation conversion table corresponding to the contrast indicated by a user is not stored, a new gradation conversion table may be generated from gradation conversion tables close to that contrast by an interpolation arithmetic operation.

As described above, in this embodiment, since exposure reference values LV0 and LV1 are simultaneously recorded with image data when generating an image file, a gradation conversion table which runs through a coordinate of (LV0, LV1) can be readily generated on the PC 200 side. In this example, as described above, since LV0 and LV1 are values which serve as a reference for an exposure in image capturing, the contrast of an image alone can be changed while maintaining an appropriate exposure by correcting a gradation conversion table without changing these values.

Furthermore, FIG. 5B represents the gradation characteristic curves of FIG. 5A. Here, in FIG. 5B, since the horizontal axis represents $\log_2$ (an input value/LV0), the vertical axis shows LV1 when the horizontal axis shows 0 (an input value = LV0). A curve before the correction and a curve after the contrast change are both curves which run through (0, LV1), halftone characteristics alone have different curves.

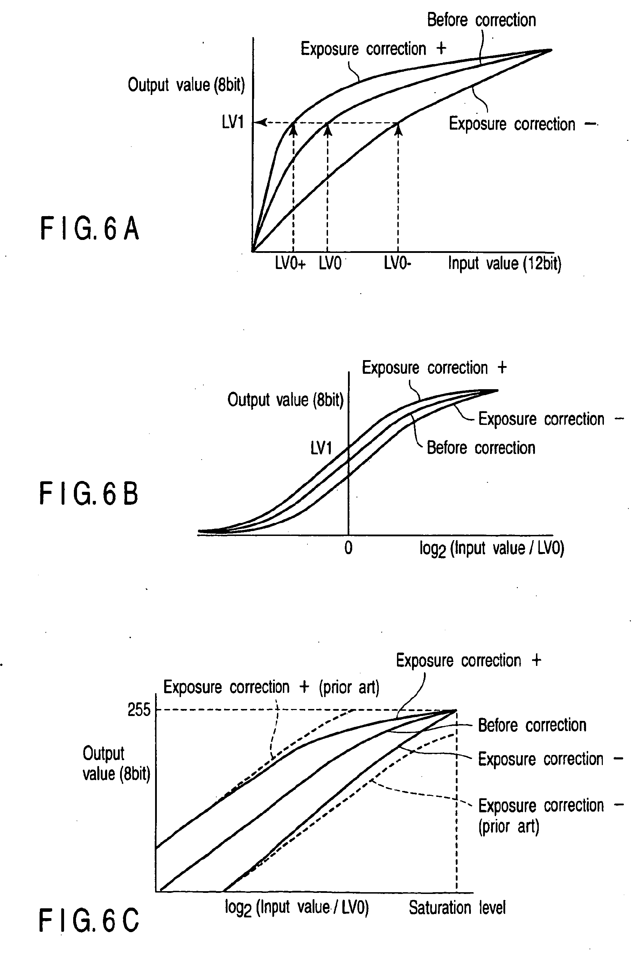

A description will now be described as to a correction of a gradation conversion table when exposure correction is instructed. FIG. 6A is a view showing a correction of a gradation conversion table based on an exposure correction, and FIG. 6B is a view showing gradation characteristic curves of FIG. 6A. Moreover, FIG. 6C is an enlarged view showing the vicinity of a saturation area of the gradation characteristic curves of FIG. 6B.

For example, when a user instructs to correct the exposure to the positive side, the gradation conversion table (before the correction) shown in FIG. 6A is corrected to a gradation conversion table (exposure correction +). On the other hand, when a user instructs to correct the exposure to the negative side, the gradation conversion table is corrected to a gradation conversion table (exposure correction -). Here, in case of the exposure correction, LV0 is changed based on the following expression:

$$\text{LV0 (after the exposure correction)} = \text{LV0 (before the exposure correction)} \times 2^{(-\text{exposure correction value})} \quad \text{(Expression 1)}$$

Then, the gradation conversion table is corrected to run through LV0 (after the exposure correction) and LV1. It is to be noted that LV1 is not a value obtained by subjecting LV0 (after the exposure correction) to gradation conversion, but it is LV1 before the exposure correction. As a result, the exposure of an entire image can be changed without varying the reference exposure. It is to be noted that the exposure correction value is a value indicative of a level of correction performed with respect to the exposure, i.e., a level of a gain with which raw data is amplified. This exposure correction value is specified by a user.

In this embodiment, since LV0 and LV1 are recorded in the image file 5, such an inappropriate exposure correction that an output is saturated or an output does not reach a saturation level (pixel value 255) as indicated by broken lines in FIG. 6C is not carried out. Further, it is possible to perform an appropriate exposure correction taking characteristics of the digital camera side into consideration.

After a gradation conversion table is corrected in accordance with a use application, gradation conversion processing or inverse gradation conversion processing of image data is effected based on the corrected gradation conversion table.

An image processing method which is performed by the image processing system comprising the digital camera 100 and the PC 200 will now be described in detail with reference to a flowchart.

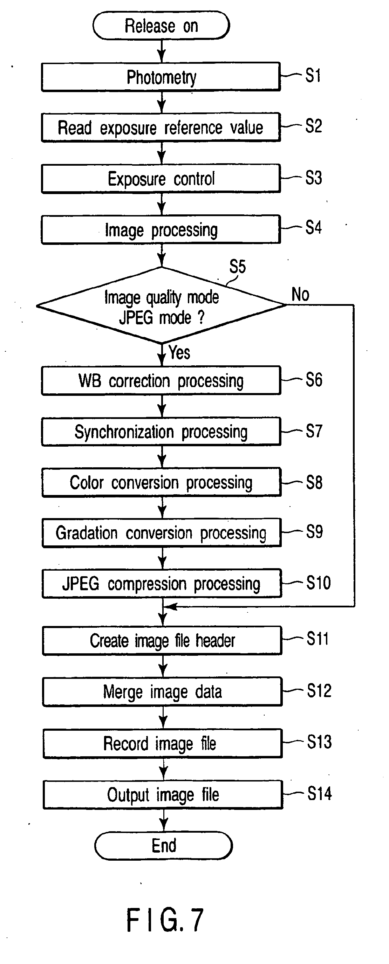

FIG. 7 is a flowchart illustrating a control on the digital camera 100 side. When a non-illustrated release button is turned on, the control of FIG. 7 is started. The photometry is first carried out based on the brightness of an image acquired by the imaging section 101 (step S1). Then, exposure reference values LV0 and LV1 stored in the ROM 107 are read (step S2). Subsequently, an exposure time or the like is calculated based on a result of the photometry at step S1 and the exposure reference values read at step S2. This may be carried out based on an average value of the brightness of the entire image, or it may be performed based on the brightness of a part of the image, e.g., a central portion of the image.

Thereafter, an exposure control is executed based on the calculated exposure time or the like (step S3), and imaging processing such as amplification is performed with respect to a signal obtained from this control (step S4).

Then, whether the image quality mode is the JPEG mode is judged (step S5). If it is determined that the image quality mode is the JPEG mode in the judgment at step S5, the white balance correction processing (step S6), the synchronization processing (step S7), the color conversion processing (step S8), the gradation conversion processing (step S9), and the JPEG compression processing (step S10) are carried out.

Then, header information of the image file is created (step S11), and the created header information and the image data are merged, thereby generating an image file (a JPEG file) (step S12). Furthermore, the generated JPEG file is recorded in the recording medium 108 (step S13).

On the other hand, if it is determined that the image quality mode is not the JPEG mode, namely, it is the raw mode in the judgment at step S5, the processing advances to step S11 from step S5. Moreover, an image file (a raw file) is created like the example of the JPEG file, and the created raw file is recorded in the recording medium 108.

When recording of the image file is terminated, the image file recorded in the recording medium 108 is output to the PC 200 (step S14).

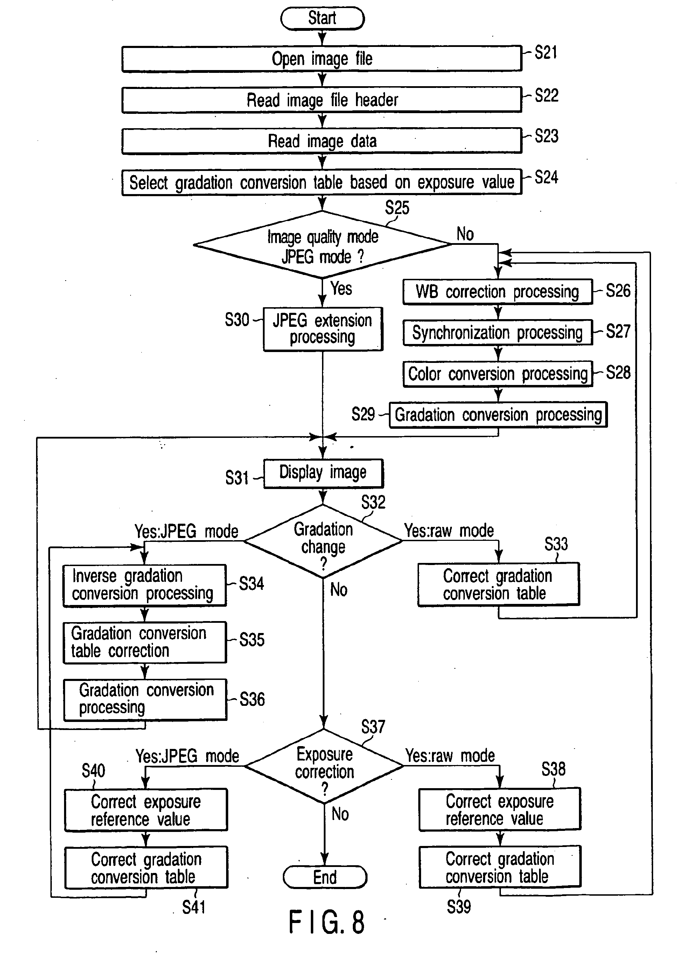

FIG. 8 is a flowchart illustrating a control on the PC 200 side. That is, when the image file is input and this image file is opened by a user (step S21), the header information (step S22) and the image data (step S23) are read. Then, a gradation conversion table is selected based on exposure reference values LV0 and LV1 recorded as the header information of the image file (step S24).

Subsequently, whether the image quality mode of the image data is the JPEG mode is judged based on the header information of the image file (step S25). If it is determined that the image quality mode is not the JPEG mode, namely, it is the raw mode in the judgment at step S25, the white balance correction processing (step S26), the synchronization processing (step S27) and the color conversion processing (step S28) which are equal to those on the digital camera 100 side are executed. Moreover, the gradation conversion processing is effected based on the gradation conversion table selected at step S24 (step S29). On the other hand, if it is determined that the image quality mode is the JPEG mode in the judgment at step S25, the JPEG data is extended (step S30).

After the above-described processing, an image is displayed in a non-illustrated display (step S31). Then, a judgment is made upon whether a gradation change is instructed by a user (step S32).

If it is determined that the gradation change is instructed in the judgment at step S32, processing which differs depending on whether the image quality mode is the raw mode or the JPEG mode is executed. If the image quality mode is the raw mode, the gradation conversion table is corrected as described in connection with FIG. 5A (step S33), and the control then shifts to step S26, thereby performing the image processing. On the other hand, if the image quality mode is the JPEG mode, the inverse gradation conversion processing is carried out with respect to the JPEG extended data (step S34). As a result, image data which is substantially linear with respect to a light quantity of a subject before gradation conversion is generated. Then, the gradation conversion table is corrected (step S35), and the gradation conversion processing based on this corrected gradation conversion table is executed (step S36).

As described above, in this embodiment, if it is determined that the image quality mode is the JPEG mode, the inverse gradation conversion processing is effected before the gradation is changed. As a result, the gradation can be changed with respect to the image data close to the image data in image capturing as compared with an example where the gradation of the JPEG data is directly changed. It is to be noted that the white balance correction or the like may be effected after the inverse gradation conversion processing at step S34.

Additionally, if it is determined that the gradation change is not instructed in the judgment at step S32, a judgment is made upon whether the exposure correction is instructed, i.e., whether an exposure correction value is specified by a user (step S37). If it is determined that the exposure correction is instructed and the image mode is the raw mode in the judgment at step S37, LV0 is corrected in accordance with Expression 1 mentioned above (step S38), then the gradation conversion table is corrected in accordance with this corrected value (step S39). Thereafter, the control returns to step S26. On the other hand, if it is determined that the exposure correction is instructed and the image quality mode is the JPEG mode in the judgment at step S37, LV0 is corrected in accordance with Expression 1 mentioned above (step S40), and the gradation conversion table is then corrected (step S41). Subsequently, the control returns to step S34.

Further, if it is determined that the exposure correction is not instructed in the judgment at step S37, the processing is terminated.

As described above, according to this embodiment, since exposure reference values LV0 and LV1 are recorded as header information when acquiring the raw file, the appropriate gradation conversion processing can be performed with respect to the raw data irrespective of model of camera, design concept of manufacturer or the like. Furthermore, since the quantity of information which is recorded as the header information is small, the transfer rate of an image file is not reduced.

Furthermore, in this embodiment, if it is determined that the image quality mode is the JPEG mode, the inverse gradation conversion processing of the image data is effected, the gradation can be appropriately changed as compared with an example where the gradation or the like of the JPEG data is directly changed.

Moreover, in this embodiment, the exposure reference values are recorded in the image file, and hence the gradation conversion table can be readily and appropriately corrected in order to perform the exposure correction as compared with an example where this processing is manually carried out.

It is to be noted that both LV0 and LV1 are recorded as the exposure reference values together with the image data, but one of these values may be determined as a fixed value and the other one alone may be recorded. For example, LV0 alone which is a value serving as a measurement reference of the ISO sensitivity (LV1 = 118 [eight bits]) may be recorded. Additionally, bit accuracies of LV0 and LV1 are determined as 12 bits and 8 bits in this embodiment, but the present invention is not restricted thereto. For example, each of LV0 and LV1 may be represented by percentage with respect to a saturation level.

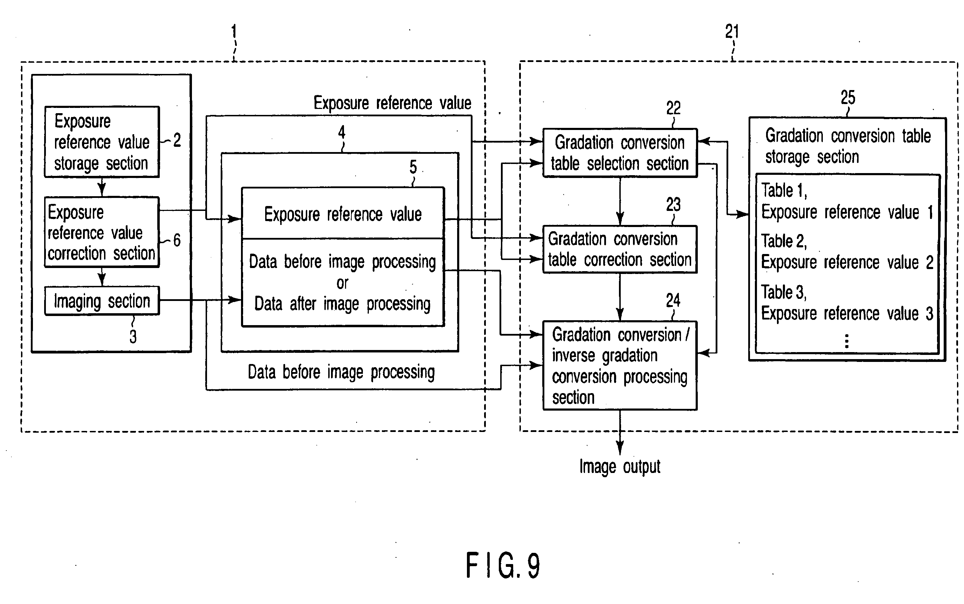

Further, although exposure reference values LV0 and LV1 are values read from the exposure reference value storage section 2 in this embodiment, such an exposure reference value correction section 6 as shown in FIG. 9 may be provided so that the exposure reference values read from the exposure reference value storage section 2 can be corrected. This exposure reference value correction section 6 corrects the exposure reference values under conditions such as presence/absence of flash lamp emission which is determined based on a photometry result or the like.

**Claims**

1. An image processing system comprising:

   an imaging apparatus (100) comprising:

   image acquiring means (101) for imaging a subject based on an exposure reference value as a reference for an exposure in imaging to acquire image data before at least gradation conversion processing is performed; and
   image outputting means (106) for outputting the image data obtained by the image acquiring means (101) together with the exposure reference value; and

   an image processing apparatus (200) comprising:

   a file interface (201) for inputting image data and the exposure reference value output by the image outputting means (106); **characterized in that**:
   gradation conversion table storing means (203) for storing gradation conversion tables corresponding to a plurality of different exposure reference values;
   gradation conversion table selecting means (202) for selecting a gradation conversion table based on the exposure reference value input by the file interface (201) from the plurality of gradation tables stored in the gradation conversion table storing means (203); and
   gradation conversion processing means (206) for performing gradation conversion processing with respect to the image data input by the file interface (201) based on the gradation conversion table selected by the gradation conversion table selecting means (202); and
   the exposure reference value includes an exposure control target value (LVO) as a target of an exposure control in the imaging and a value (LV1) obtained by performing gradation conversion processing with respect to the exposure control target value (LV0), wherein the exposure control target value (LV0) is a pixel value of RAW data obtained when capturing the image under automatic exposure control.

2. The image processing system according to claim 1, **characterized by** further comprising recording means (108) in the imaging apparatus (100) for recording the image data and the exposure reference value corresponding to the image data as one image file wherein either both values LV0 and LV1 are recorded or, if LV1 is set as a fixed value, only LV0 is recorded.

3. The image processing system according to claim 2, **characterized in that** the recording means (108) include a recording medium which is detachable with respect to the imaging apparatus (100).

4. The image processing system according to claim 1, **characterized by** further comprising exposure reference value storing means (107) in the imaging apparatus (100) for storing the exposure reference value, the imaging acquiring means (101) reading the exposure reference value from the exposure reference value storing means (107) to perform the imaging.

**5.** The image processing system according to claim 1, **characterized by** further comprising:

exposure reference value storing means (107) in the imaging apparatus (100) for storing the exposure reference value; and
exposure reference value correcting means (6) in the imaging apparatus (100) for correcting the exposure reference value read from the exposure reference value storing means (107),
the image acquiring means (101) correcting the exposure reference value read from the exposure reference value storing means (107) by the exposure reference value correcting means (6), and then performing the imaging,
wherein, for correcting the exposure reference value, the exposure control target value (LV0) is corrected based on:

LV0 (after the exposure correction) = LV0 (before the exposure correction) + $2^{-(\text{exposure correction value})}$, wherein the exposure correction value is a value specified by a user.

**6.** The image processing system according to claim 2, **characterized in that**, when only the exposure control target value (LV0) is recorded, the exposure control target value (LV0) of the exposure reference value is a value serving as a measurement reference of the ISO sensitivity.

**7.** The image processing system according to claim 1, **characterized by** further comprising:

indicating means (205) in the image processing apparatus (200) for indicating gradation characteristics of an image; and
gradation conversion table correcting means (204) in the image processing apparatus (200) for correcting a gradation conversion table selected by the gradation conversion table selecting means (202) in accordance with the gradation conversion characteristics of the image indicated by the indicating means (205).

**8.** The image processing system according to claim 7, **characterized in that** the gradation characteristics of the image indicated by the indicating means (205) include at least a contrast of the image.

**9.** The image processing system according to claim 8, **characterized in that** the gradation conversion table correcting means (204) correct the gradation conversion table in such a manner that the exposure reference value is not changed when the contrast of the image is indicated by the indicating means (205).

**10.** An image processing method comprising:

imaging a subject based on an exposure reference value as a reference for an exposure in imaging to acquire image data before at least gradation conversion processing is performed;
outputting the acquired image data together with the exposure reference value; **characterized in**
selecting a gradation conversion table based on the output exposure reference value from a plurality of gradation conversion tables different; and
performing gradation conversion processing with respect to the output image data based on the selected gradation conversion table; and
the exposure reference value includes an exposure control target value (LV0) as a target of an exposure control in the imaging and a value (LV1) obtained by performing gradation conversion processing with respect to the exposure control target value (LV0), wherein the exposure control target value (LV0) is a pixel value of RAW data obtained when capturing the image under automatic exposure control.

**11.** The image processing method according to claim 10, **characterized by** further comprising reading the exposure reference value from a storage section prior to acquiring the image data.

**12.** The image processing method according to claim 10, **characterized by** further comprising:

reading the exposure reference value from a storage section prior to acquiring the image data; and
correcting the read exposure reference value by correcting the exposure control target value based on:

LV0 (after the exposure correction) = LV0 (before the exposure correction) + $2^{-(\text{exposure correction value})}$, wherein the exposure correction value is a value specified by a user.

13. The image processing method according to claim 10, **characterized by** further comprising:

indicating gradation characteristics of an image; and
correcting the selected gradation conversion table in accordance with the indicated gradation characteristics of the image.

**Patentansprüche**

1. Bildverarbeitungssystem umfassend:

eine Bilderzeugungsvorrichtung (100) umfassend:

ein Bilderfassungsmittel (101) zum Abbilden eines Objekts basierend auf einem Belichtungsreferenzwert als eine Referenz für eine Belichtung bei dem Abbilden, um Bilddaten zu erfassen, bevor wenigstens eine Gradations-Umwandlungsverarbeitung durchgeführt wird; und
ein Bildausgabemittel (106) zum Ausgeben der von dem Bilderfassungsmittel (101) erhaltenen Bilddaten zusammen mit dem Belichtungsreferenzwert; und

eine Bildverarbeitungsvorrichtung (200) umfassend:

eine Datei-Schnittstelle (201) zum Eingeben von Bilddaten und des von dem Bildausgabemittel (106) ausgegebene Belichtungsreferenzwerts;
**dadurch gekennzeichnet, dass**
ein Gradations-Umwandlungstabellen-Speichermittel (203) zum Speichern von Gradations-Umwandlungstabellen entsprechend einer Vielzahl von verschiedenen Belichtungsreferenzwerten;
ein Gradations-Umwandlungstabellen-Auswahlmittel (202) zum Auswählen einer Gradations-Umwandlungstabelle basierend auf dem von der Datei-Schnittstelle (201) aus der Vielzahl von in dem Gradations-Umwandlungstabellen-Speichermittel (203) gespeicherten Gradations-Umwandlungstabellen eingegebenen Belichtungsreferenzwert; und
ein Gradationsumwandlungs-Verarbeitungsmittel (206) zum Durchführen der Gradationsumwandlungs-Verarbeitung in Bezug auf die durch die Datei-Schnittstelle (201) eingegebenen Bilddaten basierend auf der von dem Gradations-Umwandlungstabellen-Auswahlmittel (202) ausgewählten Gradations-Umwandlungstabelle; und
der Belichtungsreferenzwert einen Belichtungssteuerungszielwert (LV0) als ein Ziel einer Belichtungssteuerung in dem Abbilden und einen Wert (LV1) aufweist, der durch das Durchführen der Gradations-Umwandlungsverarbeitung in Bezug auf den Belichtungssteuerungszielwert (LV0) erhalten wurde, wobei der Belichtungssteuerungszielwert (LV0) ein Pixelwert von RAW Daten ist, die während dem Aufnehmen des Bilds unter der automatischen Belichtungssteuerung erhalten wurde.

2. Bildverarbeitungssystem nach Anspruch 1, **gekennzeichnet durch** weiter umfassend:

ein Aufzeichnungsmittel (108) in der Bilderzeugungsvorrichtung (100) zum Aufzeichnen der Bilddaten und des Belichtungsreferenzwerts entsprechend den Bilddaten als eine Bilddatei, wobei entweder beide Werte LV0 und LV1 aufgenommen werden oder, wenn LV1 als fester Wert festgesetzt wird, lediglich LV0 aufgenommen wird.

3. Bildverarbeitungssystem nach Anspruch 2, **dadurch gekennzeichnet, dass** das Aufzeichnungsmittel (108) ein Aufzeichnungsmedium aufweist, welches in Bezug auf die Bilderzeugungsvorrichtung (100) abnehmbar ist.

4. Bildverarbeitungssystem nach Anspruch 1, **gekennzeichnet durch** weiter umfassend:

ein Belichtungsreferenzwert-Speichermittel (107) in der Bilderzeugungsvorrichtung (100) zum Speichern des Belichtungsreferenzwerts, wobei das Bilderfassungsmittel (101) den Belichtungsreferenzwert aus dem Belichtungsreferenzwert-Speichermittel (107) ausliest, um das Abbilden durchzuführen.

**5.** Bildverarbeitungssystem nach Anspruch 1, **gekennzeichnet durch** weiter umfassend:

ein Belichtungsreferenzwert-Speichermittel (107) in der Bilderzeugungsvorrichtung (100) zum Speichern des Belichtungsreferenzwerts; und
ein Belichtungsreferenzwert-Korrekturmittel (6) in der Bilderzeugungsvorrichtung (100) zum Korrigieren des Belichtungsreferenzwerts, der aus dem Belichtungsreferenzwert-Speichermittel (107) ausgelesen wird,
wobei das Bilderfassungsmittel (101) den von dem Belichtungsreferenzwert-Speichermittel (107) ausgelesenen Belichtungsreferenzwert **durch** das Belichtungsreferenzwert-Korrekturmittel (6) korrigiert, und dann das Abbilden durchführt,
wobei zum Korrigieren des Belichtungsreferenzwerts der Belichtungssteuerungszielwert (LV0) korrigiert wird auf Basis von:

LV0 (nach der Belichtungskorrektur) = LV0 (bevor der Belichtungskorrektur) + $2^{-(\text{Belichtungskorrekturwert})}$, wobei der Belichtungskorrekturwert ein von einem Benutzer festgelegter Wert ist.

**6.** Bildverarbeitungssystem nach Anspruch 2, **dadurch gekennzeichnet, dass** wenn nur der Belichtungssteuerungszielwert (LV0) aufgenommen wird, der Belichtungssteuerungszielwert (LV0) des Belichtungsreferenzwerts ein Wert ist, der als Messbezug einer ISO Empfindlichkeit dient.

**7.** Bildverarbeitungssystem nach Anspruch 1, **gekennzeichnet durch** weiter umfassend:

ein Anzeigemittel (205) in der Bildverarbeitungsvorrichtung (200) zum Anzeigen von Gradations-Charakteristiken eines Bildes; und
ein Gradations-Umwandlungstabellen-Korrekturmittel (204) in der Bildverarbeitungsvorrichtung (200) zum Korrigieren einer Gradations-Umwandlungstabelle, die von dem Gradations-Umwandlungstabellen-Auswahlmittel (202) gemäß der Gradations-Umwandlungscharakteristiken des Bildes, welches **durch** das Anzeigemittel (205) angezeigt wird, ausgewählt wird.

**8.** Bildverarbeitungssystem nach Anspruch 7, **dadurch gekennzeichnet, dass** die Gradations-Charakteristiken des Bildes, angezeigt durch das Anzeigemittel (205), wenigstens einen Kontrast des Bildes aufweisen.

**9.** Bildverarbeitungssystem nach Anspruch 8, **dadurch gekennzeichnet, dass** das Gradations-Umwandlungstabellen-Korrekturmittel (204) die Gradations-Umwandlungstabelle derart korrigiert, dass der Belichtungsreferenzwert nicht geändert wird, wenn der Kontrast des Bildes durch das Anzeigemittel (205) angezeigt wird.

**10.** Bildverarbeitungsverfahren umfassend:

Abbilden eines Objekts basierend auf einem Belichtungsreferenzwert als eine Referenz für eine Belichtung in dem Abbilden, um Bilddaten zu erfassen, bevor wenigstens eine Gradations-Umwandlungsverarbeitung durchgeführt wird;
Ausgeben der aufgenommenen Bilddaten zusammen mit dem Belichtungsreferenzwert;
**gekennzeichnet durch** Auswählen einer Gradations-Umwandlungstabelle basierend auf dem ausgegebenen Belichtungsreferenzwert aus einer Vielzahl von verschiedenen Gradations-Umwandlungstabellen; und
Durchführen einer Gradations-Umwandlungsverarbeitung bezüglich der ausgegebenen Bilddaten basierend auf der ausgewählten Gradations-Umwandlungstabelle; und
der Belichtungsreferenzwert weist einen Belichtungssteuerungszielwert (LV0) als ein Ziel einer Belichtungssteuerung in dem Abbilden und einen Wert (LV1) auf, der **durch** Durchführen der Gradations-Umwandlungsverarbeitung in Bezug auf den Belichtungssteuerungswert (LV0) erhalten wurde, wobei der Belichtungssteuerungszielwert (LV0) ein Pixelwert von RAW Daten ist, die erhalten werden, wenn das Bild unter einer automatischen Belichtungssteuerung aufgenommen wird.

**11.** Bildverarbeitungsverfahren nach Anspruch 10, **gekennzeichnet durch** weiter umfassend
Auslesen des Belichtungsreferenzwerts aus einem Speicherabschnitt vor der Erfassung der Bilddaten.

**12.** Bildverarbeitungsverfahren nach Anspruch 10, **gekennzeichnet durch** weiter umfassend:

Auslesen des Belichtungsreferenzwerts aus einem Speicherabschnitt vor dem Erfassen der Bilddaten; und
Korrigieren des ausgelesenen Belichtungsreferenzwerts **durch** Korrigieren des Belichtungssteuerungszielwerts basierend auf:

LV0 (nach der Belichtungskorrektur) = LV0 (vor der Belichtungskorrektur) + 2$^{-\text{(Belichtungskorrekturwert)}}$, wobei der Belichtungskorrekturwert ein **durch** einen Benutzer festgelegter Wert ist.

13. Bildverarbeitungsverfahren nach Anspruch 10, **gekennzeichnet durch** weiter umfassend:

Anzeigen von Gradations-Charakteristiken eines Bildes; und
Korrigieren der ausgewählten Gradations-Umwandlungstabelle gemäß den angezeigten Gradations-Charakteristiken des Bildes.

**Revendications**

1. Système de traitement d'image, comprenant:

un appareil d'imagerie (100), comprenant:

des moyens d'acquisition d'image (101), pour imager un sujet d'après une valeur de référence d'exposition, en tant que référence pour une exposition en imagerie, pour acquérir des données image avant qu'au moins un traitement de conversion de gradation soit effectué; et
des moyens de production d'image (106), pour produire les données images obtenues par les moyens d'acquisition d'image (101), conjointement avec la valeur de référence d'exposition; et

un appareil de traitement d'image (200), comprenant:

une interface fichier (201), pour introduire des données image et la valeur de référence d'exposition fournie par les moyens de production d'image (106);

**caractérisé par**:

des moyens de stockage de table de conversion de gradation (203), pour stocker des tables de conversion de gradation, correspondant à une pluralité de valeurs de référence d'exposition différentes;
des moyens de sélection de table de conversion de gradation (202), pour sélectionner une table de conversion de gradation d'après la valeur de référence d'exposition introduite par l'interface fichier (201), parmi la pluralité de tables de gradation stockées dans les moyens de stockage de table de conversion de gradation (203); et
des moyens de traitement de conversion de gradation (206), pour effectuer un traitement de conversion de gradation par rapport aux données image introduites par l'interface fichier (201), d'après la table de conversion de gradation sélectionnées par les moyens de sélection de table de conversion de gradation (202); et
la valeur de référence d'exposition comprenant une valeur cible de commande d'exposition (LV0), en tant que cible d'une commande d'exposition dans l'imagerie, et une valeur (LV1) obtenue par accomplissement d'un traitement de conversion de gradation par rapport à la valeur cible de commande d'exposition (LV0), dans lequel la valeur cible de commande d'exposition (LV0), est une valeur de pixel de données BRUTES, obtenues lors de la capture de l'image sous une commande automatique d'exposition.

2. Système de traitement d'image selon la revendication 1, **caractérisé par** le fait de comprendre en outre des moyens d'enregistrement (108) dans l'appareil d'imagerie (100), pour enregistrer les données image et la valeur de référence d'exposition correspondant aux données image en tant qu'un fichier image, dans lequel soit les deux valeurs LV0 et LV1 sont enregistrées, soit, si LV1 est fixée en tant que valeur fixe, seule LV0 est enregistrée.

3. Système de traitement d'image selon la revendication 2, **caractérisé en ce que** les moyens d'enregistrement (108) comprennent un support d'enregistrement détachable par rapport à l'appareil d'imagerie (100).

4. Système de traitement d'image selon la revendication 1, **caractérisé par** le fait de comprendre en outre des moyens de stockage de valeur de référence d'exposition (107) dans l'appareil d'imagerie (100), pour stocker la valeur de référence d'exposition, les moyens d'acquisition d'imagerie (101) lisant la valeur de référence d'exposition à partir des moyens de stockage de valeur de référence d'exposition (107) pour accomplir l'imagerie.

**5.** Système de traitement d'image selon la revendication 1, **caractérisé par** le fait de comprendre en outre :

des moyens de stockage de valeur de référence d'exposition (107) dans l'appareil d'imagerie (100), pour stocker la valeur de référence d'exposition ; et

des moyens de correction de valeur de référence d'exposition (6) dans l'appareil d'imagerie (100), pour corriger la valeur de référence d'exposition, lue à partir des moyens de stockage de valeur de référence d'exposition (107), les moyens d'acquisition d'imagerie (101) corrigeant la valeur de référence d'exposition lue à partir des moyens de stockage de valeur de référence d'exposition (107) par les moyens de correction de valeur de référence d'exposition (6) et, ensuite, accomplissant l'imagerie,

dans lequel, pour corriger la valeur de référence d'exposition, la valeur cible de commande d'exposition (LV0) est corrigée, en se basant sur:

LV0 (après la correction d'exposition) = LV0 (avant la correction d'exposition) $+ 2^{-(\text{valeur de correction d'exposition})}$, dans lequel la valeur de correction d'exposition est une valeur spécifiée par un utilisateur.

**6.** Système de traitement d'image selon la revendication 2, **caractérisé en ce que**, lorsqu'est seulement enregistrée la valeur cible de commande d'exposition (LV0), la valeur cible de commande d'exposition (LV0) de la valeur de référence d'exposition est une valeur servant de référence de mesure de la sensibilité ISO.

**7.** Système de traitement d'image selon la revendication 1, **caractérisé par** le fait de comprendre en outre:

des moyens d'indication (205), dans l'appareil de traitement d'image (200), pour indiquer des caractéristiques de gradation d'une image; et

des moyens de correction de table de conversion de gradation (204), dans l'appareil de traitement d'image (200), pour corriger une table de conversion de gradation sélectionnée par les moyens de sélection de table de conversion de gradation (202), selon les caractéristiques de conversion de gradation de l'image indiquées par les moyens d'indication (205).

**8.** Système de traitement d'image selon la revendication 7, **caractérisé en ce que** les caractéristiques de conversion de gradation de l'image indiquées par les moyens d'indication (205) comprennent au moins un contraste de l'image.

**9.** Système de traitement d'image selon la revendication 8, **caractérisé en ce que** les moyens de correction de table de conversion de gradation (204) corrigent la table de conversion de gradation d'une manière faisant que la valeur de référence d'exposition n'est pas modifiée lorsque le contraste de l'image est indiqué par les moyens d'indication (205).

**10.** Procédé de traitement d'image, comprenant:

l'imagerie d'un sujet d'après une valeur de référence d'exposition, en tant que référence pour une exposition dans l'imagerie pour acquérir des données image avant d'accomplir au moins un traitement de conversion de gradation;

fournir en sortie les données image acquises, conjointement avec la valeur de référence d'exposition;

**caractérisé par**

la sélection d'une table de gradation, d'après la valeur de référence d'exposition produite, parmi une pluralité de tables de conversion de gradation différentes; et

accomplir un traitement de conversion de gradation par rapport aux données image fournies en sortie, d'après la table de conversion de gradation sélectionnée ; et

en ce que la valeur de référence d'exposition inclut une valeur cible de commande d'exposition (LV0), en tant que cible d'une commande d'exposition dans l'imagerie, et une valeur (LV1) obtenue par accomplissement d'un traitement de conversion de gradation par rapport à la valeur cible de commande d'exposition (LV0), dans lequel la valeur cible de commande d'exposition (LV0), est une valeur de pixel de données BRUTES, obtenues lors de la capture de l'image sous une commande automatique d'exposition.

**11.** Procédé de traitement d'image selon la revendication 10, **caractérisé par** le fait de comprendre en outre la lecture de la valeur de référence d'exposition à partir d'une section de stockage, avant d'acquérir les données image.

**12.** Procédé de traitement d'image selon la revendication 10, **caractérisé par** le fait de comprendre en outre:

la lecture de la valeur de référence d'exposition à partir d'une section de stockage, avant d'acquérir les données image; et
la correction de la valeur de référence d'exposition lue, par correction de la valeur cible de commande d'exposition en se basant sur:

LV0 (après la correction d'exposition) = LV0 (avant la correction d'exposition) + $2^{-(\text{valeur de correction d'exposé})}$, dans lequel la valeur de correction d'exposition est une valeur spécifiée par un utilisateur.

**13.** Procédé de traitement d'image selon la revendication 10, **caractérisé par** le fait de comprendre en outre:

l'indication de caractéristiques de gradation d'une image; et
la correction de la table de conversion de gradation sélectionnée, selon les caractéristiques de gradation indiquées de l'image.

FIG. 1

FIG. 2

EP 1 578 109 B1

**FIG. 3A**

200

5
Exposure control target value

Image data (raw data or JPEG data)

201
File interface

202
Gradation conversion table selection section

204
Gradation conversion table correction section

206
Image processing section

203
Gradation conversion table storage section

205
User interface

Image output

**FIG. 3B**

| | | LV0 (12bit) | | |
|---|---|---|---|---|
| | | 480 | 580 | 640 |
| LV1 (8bit) | 130 | Table 1 | Table 2 | Table 3 |
| | 140 | Table 4 | Table 5 | Table 6 |
| | 150 | Table 7 | Table 8 | Table 9 |

EP 1 578 109 B1

Output value (8bit)

Table 7

150

130

Table 3

**FIG.4**

480 640    Input value (12bit)

Before correction

Contrast Hi

Output value (8bit)

LV1

Contrast Low

**FIG.5A**

LV0    Input value (12bit)

Contrast Hi

Output value (8bit)

Contrast Low

LV1

Before correction

**FIG.5B**

0    $\log_2$ (Input value / LV0)

Before correction

Exposure correction +

Output value (8bit)

LV1

**F I G. 6 A**

Exposure correction −

LV0+ LV0 LV0-      Input value (12bit)

Exposure correction +

Output value (8bit)

LV1

**F I G. 6 B**

Exposure correction −

Before correction

0      log₂ (Input value / LV0)

Exposure correction +

Exposure correction + (prior art)

255

Output value (8bit)

Before correction

Exposure correction −

Exposure correction − (prior art)

log₂ (Input value / LV0)      Saturation level

**F I G. 6 C**

```
        ( Release on )
              │
      ┌───────────────────┐
      │    Photometry     │─── S1
      └───────────────────┘
              │
      ┌───────────────────────────┐
      │ Read exposure reference value │─── S2
      └───────────────────────────┘
              │
      ┌───────────────────┐
      │  Exposure control │─── S3
      └───────────────────┘
              │
      ┌───────────────────┐
      │  Image processing │─── S4
      └───────────────────┘
              │           S5
              ▼
        ◇ Image quality mode        No
          JPEG mode ? ◇─────────────┐
              │ Yes                  │
      ┌───────────────────┐         │
      │ WB correction processing │─── S6  │
      └───────────────────┘         │
              │                      │
      ┌───────────────────────┐     │
      │ Synchronization processing │─── S7  │
      └───────────────────────┘     │
              │                      │
      ┌───────────────────────┐     │
      │ Color conversion processing │─── S8  │
      └───────────────────────┘     │
              │                      │
      ┌───────────────────────────┐ │
      │ Gradation conversion processing │─── S9  │
      └───────────────────────────┘ │
              │                      │
      ┌───────────────────────┐     │
      │ JPEG compression processing │─── S10 │
      └───────────────────────┘     │
              │◄─────────────────────┘
      ┌───────────────────┐
      │ Create image file header │─── S11
      └───────────────────┘
              │
      ┌───────────────────┐
      │  Merge image data │─── S12
      └───────────────────┘
              │
      ┌───────────────────┐
      │  Record image file │─── S13
      └───────────────────┘
              │
      ┌───────────────────┐
      │  Output image file │─── S14
      └───────────────────┘
              │
         (  End  )
```

# F I G. 7

Start

Open image file — S21

Read image file header — S22

Read image data — S23

Select gradation conversion table based on exposure value — S24

S25

Image quality mode JPEG mode ? — No

Yes

S30 — JPEG extension processing

WB correction processing — S26

Synchronization processing — S27

Color conversion processing — S28

S29 — Gradation conversion processing

S31 — Display image

S32

Yes:JPEG mode — Gradation change ? — Yes:raw mode

Inverse gradation conversion processing — S34

S33

Correct gradation conversion table

No

Gradation conversion table correction — S35

Gradation conversion processing — S36

S37

Yes:JPEG mode — Exposure correction ? — Yes:raw mode

S40

Correct exposure reference value

S38

Correct exposure reference value

No

Correct gradation conversion table

End

Correct gradation conversion table

S41

S39

FIG. 8

EP 1 578 109 B1

Exposure reference value

Exposure reference value storage section ~2

Exposure reference value correction section ~6

Imaging section ~3

Exposure reference value ~4

Exposure reference value ~5

Data before image processing
or
Data after image processing

Data before image processing

Gradation conversion table selection section ~22

Gradation conversion table correction section ~23

Gradation conversion / inverse gradation conversion processing section ~24

Gradation conversion table storage section ~25

Table 1,
Exposure reference value 1

Table 2,
Exposure reference value 2

Table 3,
Exposure reference value 3

Image output

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003244626 A
- EP 1523182 A1
- US 20020036697 A1
- JP 05323750 A
- WO 2004008754 A1